# EUROPEAN PATENT APPLICATION

(11) **EP 0 937 738 A2**
(43) Date of publication of application: **25.08.1999**
(21) Application number: 99301333.3
(22) Date of filing: 24.02.1999
(51) Int. Cl.: C08J 3/12

(54) **Method for producing a polytetrafluoroethylene granulated powder**

(30) Priority: 24.02.1998 JP 4148198
(71) Applicant: DuPont-Mitsui Fluorochemicals Co., Ltd., Tokyo 100 (JP)
(72) Inventor: Ogura, Masatsune, Ichikawa-shi, Chiba Prefecture (JP); Hiromatsu, Hidetaka, Shimizu-shi, Shizuoka-shi (JP)
(74) Representative: Matthews, Derek Peter

(57) **Abstract**

Granulation of PTFE powder in a mixture of hydrofluoroether and water yields granulated PTFE that has excellent flow and is relatively soft. The method has minimal environmental impact.

## Description

### FIELD OF THE INVENTION

The present invention relates to a method for producing a granulated powder of polytetrafluoroethylene (PTFE). More specifically, it relates to a PTFE granulated powder production method which is unlikely to cause environmental harm.

### BACKGROUND OF THE INVENTION

PTFE, because of its high viscosity, cannot be processed by a melt-forming method such as injection molding or extrusion. Instead, it is molded by a method similar to powder metallurgy, in which the powder is filled into a mold and compressed to give a preform, which is then fired (sintered) to yield the final product. Hence, PTFE granular powder is required to have powder properties suitable for this type of special molding process.

For example, the most important powder property in PTFE granular powder is the excellent moldability required for the molded article to maintain a high tensile strength and tensile elongation; that is, mutual cohesion of the powder particles when compressed, fusion between the particles in the subsequent firing step, and the absence of voids in the resultant molded article. The next most important property of the powder is the ability for it to pack well into a mold, meaning good powder flowability and a high apparent density.

In order to satisfy the first of these properties, the powder particles must be small. Powder having an average particle size of not more than 100 µm, and generally from 10 to 50 µm, is required. On the other hand, to satisfy the latter property, the particles must be large, with a powder having an average particle size of 100 to 1000 µm generally being required.

The powder that has been developed to satisfy these mutually conflicting requirements is a granulated powder. This powder is produced by taking coarse particles of PTFE obtained by suspension polymerization, grinding these coarse particles to an average particle size of not more than 100 µm, then granulating this finely ground powder to an average particle size of 100 to 1000 µm.

Of the many methods known for granulating PTFE finely ground powder, one typical method consists of granulation by stirring PTFE powder within a liquid mixture of water and an organic liquid. This granulation process has three stages. In the first stage, a finely ground PTFE powder is stirred within a liquid mixture of an organic liquid and water and thereby agglomerated into PTFE particles. The second stage is a spherizing (rounding) step in which the crumbly agglomerated powder thus obtained is compacted and prepared into the shape of spherical particles. In the third stage, the rounded powder is separated from the liquid and dried.

In the rounding step, use is generally made of a method for rounding the agglomerated particles which is carried out at a higher temperature than the granulating step, but a method in which the stirring speed is changed from a high speed to a low speed (JP-B 52-21011, 1977) and a method which uses two organic liquids having different boiling points (JP-A 6-73189, 1994) are also known.

The above agglomerating and rounding steps are both carried out in the presence of an organic liquid. Necessary conditions for the organic liquid used here are that it have a low surface tension, be capable of wetting PTFE, and be insoluble in water; and a desirable condition is that the boiling point fall within a range of 30° to 150°C. Organic liquids such as these which have been proposed for use in this way include aliphatic hydrocarbons, aromatic hydrocarbons, ethers, halogen derivatives, and fluoro derivatives (JP-B 44-22619, 1969). Yet, the organic liquids actually put to use were chlorocarbons (CC) and hydrochlorocarbons (HCC) such as non-flammable carbon tetrachloride, trichloroethylene, and perchloroethylene which were selected from the standpoint of fire prevention. Non-toxic chlorofluorocarbons (CFC) such as trichlorotrifluoroethane also came into use later to improve the safety of the work environment.

These CCs, HCCs, and CFCs are excellent as organic liquids for providing PTFE granular powders having good flowability, but such substances are now known to cause destruction of the ozone layer, global warming, and groundwater contamination. In fact, CFCs are no longer in use.

In order to deal with these environmental problems, methods have been proposed which involve the use, as the organic liquid in the granulation process, of hydrochlorofluorocarbons (HCFC) and hydrofluorocarbons (HFC) having a low ozone depletion potential (ODP) and a low global warming potential (GWP) (JP-A 4-13729, 1992 and JP-A 7-278314, 1995). However, although HCFCs have a lower ODP and GWP than CFCs, these are by no means zero. As for HFCs, although they have an ODP of zero, their GWP is higher than that of HCFCs.

Under the circumstances, there is a need for the development of a method which uses organic liquids that are easier on the environment than HCFCs and HFCs and which is able to produce PTFE granulated powder having excellent moldability.

### SUMMARY OF THE INVENTION

This invention provides a method for producing a polytetrafluoroethylene granulated powder, the method comprising the steps of:
stirring a polytetrafluoroethylene granular powder having an average particle size of not more than 100 µm in a mixture of a hydrofluoroether of the general formula

   CₙF₂ₙ₊₁OCₘH₂ₘ₊₁

   (wherein n is an integer from 3 to 7, and m is 1 or 2) with water so as to agglomerate the granular powder to form agglomerated powder;
rounding the agglomerated powder to form rounded powder; and
drying the rounded powder.

This method has minimal environmental impact. Preferred hydrofluoroethers include C₄F₉OCH₃ and C₄F₉OC₂H₅.

### DETAILED DESCRIPTION

We have sought a method for producing PTFE granular powder that resolves the above problems, as a result of which we have discovered that these problems can be overcome by using a mixture of water with a hydrofluoroether (HFE) having specific numbers of carbon atoms and hydrogen atoms to granulate the PTFE powder.

The present invention thus provides a method for producing a polytetrafluoroethylene granulated powder, the method comprising the steps of stirring a polytetrafluoroethylene granular powder having an average particle size of not more than 100 µm in a mixture of a hydrofluoroether of the general formula CₙF₂ₙ₊₁OCₘH₂ₘ₊₁ (wherein n is an integer from 3 to 7, and m is 1 or 2) with water so as to agglomerate the granular powder, rounding the agglomerated powder, and drying the rounded powder. By using the method of the present invention, there can be obtained PTFE granulated powder which has excellent powder flow suitable for molding in an automated molding machine and is relatively soft, thus making it possible to obtain molded articles having smooth surfaces. Because the liquid granulating medium used in this invention has a low ozone layer depletion potential and a low global warming potential, it has a minimal environmental impact.

The PTFE powder used in this invention is what is referred to as "molding powder" or "granular powder." This is obtained by the suspension polymerization of tetrafluoroethylene (TFE) in water. (PTFE made by the suspension polymerization process is known by the art term "granular resin".) This PTFE includes homopolymers of TFE, as well as modified PTFEs which are obtained by the copolymerization of a small amount of a modifier but, like the homopolymers, do not have melt processability. Suitable modifiers include monomers that are copolymerizable with TFE, and specifically perfluoroalkenes having at least 3 carbons, such as hexafluoropropylene, and perfluoro(alkyl vinyl ethers), examples of the latter being perfluoro(ethyl vinyl ether) and perfluoro(propyl vinyl ether). The amount of modifier is generally selected from a range of 0.001 to 2% by weight, depending on the type of modifier and the purpose for which it is to be used.

In the practice of this invention, the above-described PTFE granular powders in the form of finely divided powder having an average particle size of not more than 100 µm, and preferably 10 to 50 µm, is used as the starting material for the granulated powder. A granulated powder produced from a powder having an average particle size greater than 100 µm is undesirable because molded articles having many voids are obtained therefrom.

A mixed powder obtained by blending glass fibers, carbon fibers, an inorganic powder such as bronze, graphite or molybdenum disulfide, a melt-moldable fluorocarbon resin, or a heat-resistant resin powder into the above-described PTFE finely divided powder may also be used as the starting material for the granulated powder.

The organic liquid used to granulate the PTFE of the present invention is a hydrofluoroether having the general formula CₙF₂ₙ₊₁OCₘH₂ₘ₊₁ (wherein n is an integer from 3 to 7, and m is 1 or 2). The HFE represented by the above formula is an organic liquid that is highly suitable for PTFE granulation because it is insoluble in water, has a low surface tension, and is capable of wetting PTFE, in addition to which its non-flammability and non-toxicity make it excellent as well in terms of fire prevention and protecting the work environment. Compared with the CCs, CFCs, HCFCs, and HFCs which have hitherto been used as organic liquids for granulating PTFE, HFEs such as those shown in Table 1 also have more desirable characteristics from the standpoint of protecting the natural environment.

Hydrofluoroethers in which n in the above formula is smaller than 2 have too low a boiling point, as a result of which the evaporative loss of HFE becomes greater, which tends to make agglomeration of the PTFE more difficult. HFEs in which n is larger than 8 have too high a boiling point, as a result of which the energy consumption for evaporating and removing the HFE becomes high, in addition to which the moldability of the granulated powder obtained tends to be inferior. Moreover, HFEs in which n is larger than 3 pose a problem with respect to fire prevention.

**Table 1**

| **Organic Liquids for Granulating PTFE** | | | | |
|---|---|---|---|---|
| Type | Name | Chemical formula | ODP | GWP |
| HFE | perfluorobutyl methyl ether | C₄F₉OCH₃ | 0 | 480 |
| | perfluorobutyl ethyl ether | C₄F₉OC₂H₅ | 0 | 100 |
| CFC | 113 | CClF₂CCl₂F | 0.8 | 5000 |
| HCFC | 141b | CH₃CCl₂F | 0.1 | 630 |
| HCFC | 123 | CHCl₂CF₃ | 0.02 | 93 |
| CC | tetrachloroethylene | CCl₂CCl₂ | 0.005 | |
| HCFC | 225cb | CClF₂CF₂CHClF | 0.03 | 530 |
| HFC | 43-10mee | CF₃CHFCHFCF₂CF₃ | 0 | 1300 |

| | | | | |
|---|---|---|---|---|
| ODP (Ozone Depletion Potential): Represents the depleting effect on the ozone layer by a unit weight of the substance in question that has been discharged into the atmosphere relative to a value of 1.0 for CFC-11. | | | | |
| GWP (Global Warming Potential): Represents the effect on global warming by a unit weight of the substance in question that has been discharged into the atmosphere relative to a value of 1.0 for CO₂. | | | | |

Of the HFEs of the above formula that are used in this invention, the HFEs having boiling points (B.P.) of 30° to 100°C which are shown below in Table 2, and especially perfluorobutyl methyl ether (PFBME) and perfluorobutyl ethyl ether (PFBEE), are ideal HFEs for the purposes of this invention because there is little evaporative loss in the agglomeration step, and the energy consumption for evaporation and removal of the HFE in the rounding or drying step can be reduced.

**Table 2**

| **Properties of Hydrofluoroethers** | | |
|---|---|---|
| HFE | B.P. (°C) | Surface Tension (dyne/cm, 25°C) |
| Perfluoropropyl methyl ether (C₃F₇OCH₃) | 34 | 15 |
| Perfluorobutyl methyl ether (C₄F₉OCH₃) | 60 | 14 |
| Perfluorobutyl ethyl ether (C₄F₉OC₂H₅) | 78 | 14 |
| Perfluoropentyl methyl ether (C₅F₁₁OCH₃) | 85 | 15 |
| Perfluoropentyl ethyl ether (C₅F₁₁OC₂H₅) | 100 | 15 |

The above HFEs may be used alone or in admixture. If necessary, they may also be mixed and used together with other organic liquids.

The granulation method of this invention comprises three stages, the first stage being an agglomeration step in which PTFE powder is agglomerated by stirring in a mixture of HFE and water, the second stage being a rounding step in which the crumbly agglomerated powder following agglomeration is compacted and prepared into the shape of spherical particles, and the third stage being a drying step in which the rounded powder is separated from the liquid and dried.

Methods known for adding the PTFE, organic liquid and water in the agglomeration step serving as the first stage include adding water to a slurry of PTFE and organic liquid (JP-B 44-22619, 1969), adding PTFE to an emulsion of the organic liquid and water (JP-B 47-1549, 1972), and adding the organic liquid to an aqueous dispersion of PTFE (JP-B 49-17855, 1974). In the method of this invention in which a HFE is used as the organic liquid, use may be made of any one of these techniques or a technique in which all three ingredients are added at the same time. The order of addition apparently does not lead to any essential difference in the PTFE granulated powder.

In the agglomeration step, PTFE finely divided powder particles agglomerate into secondary particles having an average particle size of 100 to 1,000 µm, and preferably 300 to 700 µm. The agglomeration temperature is a temperature at which the PTFE finely divided powder particles agglomerate but do not become too hard; that is, a temperature not less than the glass transition point of PTFE (30°C) and below the boiling points of water and the HFE. The stirring speed is a speed which gives agglomerated particles of the above-indicated average particle size; that is, a speed at which the PTFE powder particles collide due to stirring and agglomerate under the binder effect of the HFE, along with which giant agglomerates are re-dispersed by the shearing action which accompanies stirring so as to give PTFE agglomerated particles of the above-mentioned average particle size. Accordingly, the PTFE/HFE/water mixing ratio in the agglomeration step should be a proportion that enables the PTFE to be thoroughly wet by the HFE and enables dispersion of the agglomerated particles in the water. For example, a proportion within a range of 1 kg of PTFE to a volume of 0.2 to 2 liter of HFE to a volume of 2 to 10 liter of water is preferred.

In the rounding step serving as the second stage of the inventive method, the shape of the agglomerated particles is rendered spherical and the crumbly particles following agglomeration are compacted. The specific method by which this is accomplished consists of lowering the stifling speed after completion of the agglomeration step to a speed at which the agglomerated powder cannot re-disperse, then compacting the agglomerated particles and giving them a spherical shape while at the same time collecting and agglomerating any remaining PTFE finely dispersed powder particles that remain dispersed in the water.

The higher the temperature during rounding, the harder they can be compacted, and so when a granulated powder having a good powder flowability is desired, the temperature is raised above the boiling point of the HFE and rounding is carried out while evaporating off the HFE. On the other hand, when a granular powder having a good moldability is desired, rounding is carried out while holding the PTFE in a wet state at a temperature below the boiling point of the HFE. No particular limitation is imposed on the rounding temperature, which can be suitably selected from a temperature range of 30° to 150°C, depending on the desired properties of the powder.

A stirring tank equipped with a stirrer, a baffle and the like may be used as the agglomeration tank and the rounding tank. This tank may be either open or closed, although to reduce the loss of HFE, it is preferable to use a closed tank having a condenser or an adsorption apparatus. A common tank may be used as the agglomeration tank and the rounding tank, or separate tanks may be used. When a common tank is used, it is preferable to use a variable-speed stirrer.

In the drying step serving as the third stage of the inventive process, when rounding has been carried out by raising the temperature to the boiling point of the HFE and evaporating off the HFE, water is separated from the PTFE rounded powder through a screen, and when rounding has been carried out at a temperature below the boiling point of the HFE, the mixture of water and HFE is separated from the rounded PTFE powder through a screen. This is followed by heating at a normal pressure or at a reduced pressure so as to evaporate off the water or mixture entrained with this powder, thus drying the powder.

The heating method used for drying the moisture-containing PTFE is generally a direct heating method such as hot-air drying. The PTFE granulated powder is customarily dried by hot air at a temperature of 150° to 200°C over a period of from several hours to several tens of hours.

In the drying step of this invention, use can be made of a hot-air drying method such as that described above. However, because HFEs self-heat more easily under microwave irradiation than HCFCs or HFCs, a method for drying the PTFE granulated powder by using microwaves to induce the water and HFE to self-heat and evaporate off is preferable in that it shortens the drying time, enhances the thermal efficiency, increases the HFE recovery efficiency, and prevents diffusion to the atmosphere.

The microwaves used in the practice of the invention preferably have a frequency of 300 to 30,000 MHz, and especially 1,000 to 10,000 MHz. In drying by means of microwaves, because the temperature within the drying oven and the temperature of the material being dried (PTFE powder) are held at relatively low levels compared with hot-air drying, it is advantageous to provide a vapor discharge opening and to discharge vapors to the exterior by means of a fan or a vacuum pump so that they do not re-condense. The use of dry air, and especially high-temperature dry air, as the carrier for the generated vapor enables the microwave energy to be reduced.

Recovery of the HFE in the drying step is carried out by making use of the ready separability of water and the HFE into two phases. That is, the mixture of water and HFE separated from the PTFE rounded powder at a screen or the like is placed at rest, and the HFE bottom phase is drained off.

Because the small amount of HFE that is entrained along with the water by the PTFE rounded powder evaporates together with the water as a result of heating for the drying step, this vapor can either be condensed and liquefied or be adsorbed by activated carbon or the like, and thus recovered.

### EXAMPLES

Examples of the invention are given below by way of illustration. The methods used to measure the physical properties of the PTFE granulated powder obtained in the examples are described below, as are also the methods used to fabricate molded articles therefrom and to measure their physical properties.

### 1. Physical Properties of the Granular Powder

### (1) Particle Size and Particle Size Distribution:

### (1-1) Average Particle Size:

Standard sieves with respective mesh sizes of 20, 28, 35, 48, 70, and 200 were stacked in this order from the top down, a sample of powder was placed on the top sieve, and the weight of powder left on each sieve was determined. Based on each of these weights, the 50% particle size on log-probability paper was taken as the average particle size using the general method of ASTM D-4894.

### (1-2) d₁₆/d₈₄:

The average particle size measurement data described above was used to determine the ratio d₁₆/d₈₄ between the 16 wt% particle size (the particle size exceeded for 16 wt% of the sample) and the 84 wt% particle size (the particle size exceeded for 84 wt% of the sample), and this ratio was employed as a gauge of the particle size distribution. A smaller value indicates a narrower particle size distribution, which is desirable in a molding powder.

### (1-3) 70 Mesh Pass %:

The 70 mesh pass % was measured, and this was used as a gauge of the proportion of fine powder. A larger value indicates a greater amount of fine powder in the particles, which is undesirable in a molding powder.

### (2) Apparent Specific Gravity:

The weight in grams of sample, which was dropped from a hopper having a damper (plate valve) into a cylindrical vessel having a capacity of 250 cc and was scraped flat at the top with a straight edge such as a ruler, was multiplied by 4. The resulting value was taken as the apparent specific gravity.

### (3) Angle of Repose:

Sample powder was dropped from a glass funnel, and was heaped onto a stainless steel disk provided at the bottom thereof. The angle formed by the side of this heap of powder with respect to the horizontal (the angle of repose) was measured. Smaller angles of repose indicate better powder flow.

### 2. Molding Method

In accordance with ASTM D-1457 (now D-4894 for granular PTFE), PTFE granular powder (14.5 g) was placed in a cylindrical mold having an inside diameter of 76.2 mm, then pressed under a pressure of 350 kg/cm², after which the temperature was raised in a firing oven and 30 minutes of firing was carried out at 380°C, giving a disk having a thickness of 1.7 mm.

### 3. Physical Properties of the Molded Article

### Tensile Strength and Tensile Elongation

Using a disk having a thickness of 1.7 mm formed under the above conditions, a tensile test was carried out in general accordance with ASTM D-638, and the tensile strength (kg/cm) and tensile elongation (%) were measured.

### Working Example 1

Five kilograms of ground PTFE (obtained from suspension polymerization) powder having an average particle size of 35 µm were filled into a 50-liter closed container equipped with a stirrer and 1.8 liters of perfluorobutyl methyl ether (PFBME) was added, following which 20 liters of water were added and agglomeration was carried out by stirring the mixture for 7 minutes at a rotational speed of 1,000 rpm (circumferential velocity about 10 m/s) while maintaining the temperature at 35°C. The PTFE powder was then rounded by lowering the rotational speed to 380 rpm and stirring at this speed for 10 minutes. The rounded PTFE granulated powder was dried by the two methods described below, and the physical properties of the resulting granulated dry powders and molded articles obtained therefrom were measured.

### Drying Method 1:

The above-described rounded PTFE granulated powder was separated from the mixture of PFBME and water using a 100-mesh screen and dried in an oven at 170°C for 7 hours. The average particle size, apparent specific gravity, and powder flowability (angle of repose) of the resulting granulated powder were measured. The granulated powder was compression molded by the molding method described above, and the tensile strength and elongation of the molded articles thus obtained were measured. The results are shown in Table 3.

### Drying Method 2:

Fifty grams of PTFE powder separated from the mixture of PFBME and water in above Drying Method 1 was placed in a glass Petri dish having a diameter of 9 cm and a depth of 2 cm, then set at the center of the turntable in a microwave oven (manufactured by Matsushita Jusetsu Kiki under the brand name National Oven Denshi Renji NE-AC60), the "high" setting on the oven was selected, and drying was carried out for 20 minutes with microwaves having a frequency of 2450 MHz. The resulting granulated powder was then compression molded by the same molding method as described above, and the tensile strength and elongation of the resulting molded articles were measured. The results are shown in Table 3.

### Working Example 2

Five kilograms of PTFE powder having an average particle size of 35 µm, 1.8 liters of perfluorobutyl ethyl ether (PFBEE) and 20 liters of water were added to a 50-liter closed container equipped with a stirrer, and agglomeration was carried out by stirring the mixture at a rotational speed of 1,000 rpm and a temperature of 35°C for 7 minutes. The agglomerated particles were then rounded by lowering the rotational speed to 380 rpm, raising the temperature to 78°C at a rate of 2°C/min, and stirring for 25 minutes while evaporating off and removing the PFBEE. Water was separated from the rounded particles with a 100-mesh screen, and drying was carried out by two drying methods (using a conventional oven or a microwave oven) in the same manner as in Working Example 1, thereby giving granular powders. Table 3 shows the physical properties of the granular powders and the physical properties of molded articles obtained from these powders.

**Table 3**

| **Properties for Working Examples 1-2** | | | | |
|---|---|---|---|---|
| | Working Example 1 | | Working Example 2 | |
| Organic liquid | PFBME (C₄F₉OCH₃) | | PFBEE (C₄F₉OC₂H₅) | |
| **Properties of granular powder** | | | | |
| Average particle size (µm) | 384 | | 390 | |
| d₁₆/d₈₄ | 2.1 | | 2.0 | |
| 70 Mesh Pass % | 10.4 | | 9.8 | |
| Apparent specific gravity (g/L) | 848 | | 886 | |
| Angle of repose (°) | 42 | | 39 | |
| | Drying Method 1 | Drying Method 2 | Drying Method 1 | Drying Method 2 |

| **Properties of molded articles** | | | | |
|---|---|---|---|---|
| Tensile strength (kg/cm²) | 313 | 319 | 291 | 295 |
| Elongation (%) | 317 | 323 | 288 | 300 |

## Claims

1. A method for producing a polytetrafluoroethylene granulated powder, the method comprising the steps of:
stirring a polytetrafluoroethylene granular powder having an average particle size of not more than 100 µm in a mixture of a hydrofluoroether of the general formula
CₙF₂ₙ₊₁OCₘH₂ₘ₊₁
(wherein n is an integer from 3 to 7, and m is 1 or 2) with water so as to agglomerate said granular powder to form agglomerated powder; rounding said agglomerated powder to form rounded powder; and drying said rounded powder.

2. The method for producing a polytetrafluoroethylene granulated powder of Claim 1 wherein, following completion of the agglomeration step, said rounding is carried out by stirring said agglomerated powder at a stirring speed at which said powder does not re-disperse.

3. The method for producing a polytetrafluoroethylene granulated powder of Claim 1 or 2 wherein, following completion of the agglomeration step, said rounding is carried out while heating to at least the boiling point of the hydrofluoroether so as to evaporate and remove the hydrofluoroether.

4. The method for producing a polytetrafluoroethylene granulated powder of any one of Claims 1 to 3 wherein said drying is carried out by using microwaves to heat and evaporate water or water in admixture with said hydrofluoroether that has been entrained by said rounded powder.

5. The method for producing a polytetrafluoroethylene granulated powder of any one of Claims 1 to 4 wherein the hydrofluoroether is perfluorobutyl methyl ether or perfluorobutyl ethyl ether.
